# EUROPEAN PATENT SPECIFICATION

(11) **EP 2 056 678 B1**
(45) Date of publication and mention of the grant of the patent: **21.07.2010**
(21) Application number: 07785737.3
(22) Date of filing: 15.08.2007
(51) Int. Cl.: A22B 5/00, A22B 7/00

(54) **LAYING DOWN HALF CARCASSES**
ABLEGEN VON SCHLACHTTIERHÄLFTEN
POSE DE DEMI-CARCASSES

(30) Priority: 16.08.2006 DK 200601071
(43) Date of publication of application: 13.05.2009
(73) Proprietor: KJ Industries A/S, 6710 Esbjerg V (DK)
(72) Inventor: NIELSEN, Erik Vind, 6700 Esbjerg (DK); KRÜGER, Peter, 6715 Esbjerg N (DK)
(74) Representative: Inspicos A/S
(86) International application number: PCT/DK2007/000373
(87) International publication number: WO 2008/019688

(56) References cited:
- EP-A- 0 607 744
- WO-A-01/15538
- US-A- 2 423 930

## Description

### Field of the invention

The present invention relates to a device, a system and a method for laying down right and left carcase sides, preferably pig carcasses, from an overhead conveyor to a working surface. Special embodiments of the invention are especially applicable for precise and uniform positioning of the carcase sides on a working surface, among these precise angling of the carcase sides relative to the working surface. The carcase sides are typically carcase sides of pig or cattle. A device for laying down carcass sides is known from WO-A-01/15538.

### Background of the invention

It is known to convey right and left carcase sides vertically in an overhead conveyor wherein each individual carcase side is suspended in suspension devices such as hooks wherein the carcase side is suspended in hind toe sinews, or in a chain tied around the hind leg.

When the carcase sides are suspended from the suspension devices, they will normally be suspended with right and left carcase sides in random order, i.e. every second carcase side in the overhead conveyor is not necessarily a right carcase side, and that every second carcase side is not necessarily a left carcase side. Moreover, the carcase sides will normally be suspended such that they may rotate around their vertical axis, i.e. such that their orientation relative to the direction of movement of the overhead conveyor is arbitrary. Accordingly, the flesh side of some carcase sides faces in one direction, while the flesh side of other carcase sides face a second direction.

For the purpose of further processing, e.g. laying down to horizontal level for rough cutting up or cutting out predetermined parts of the carcase sides, it may be desirable to ensure a uniform orientation of the carcase sides and/or a sorting of the carcase sides into right and left carcase sides, respectively.

During rough cutting up, the carcase sides are normally conveyed horizontally on the skin side through the cutting means, normally circular saws, and normally an operator will be positioned before the laying down in order to arrange the carcase sides in such a way that they are laid down on the skin sides. Furthermore, an operator will be positioned at the conveyor belt at which the carcase sides are laid down in order to arrange the carcase sides such that the angle of the longitudinal axes of the carcase sides relative to the transport direction of the horizontal conveyor belt is correct, and in such a way that the carcase sides are correctly positioned relative to the cutting means.

### Description of the invention

It is an object of preferred embodiments of the present invention to provide a system allowing uniform laying down of carcase sides from an overhead conveyor, preferably laying down ensuring that the carcase sides are laid down with the skin sides against a substantially horizontal working surface, such as a table or a conveyor. Furthermore, it is an object of preferred embodiments of the present invention to ensure that the carcase sides may be laid down with a certain angling relative to the working surface, and to ensure that right and left half carcasses may be laid down at different angles.

In a first aspect, the invention provides a device for laying down carcase sides from an overhead conveyor to a working surface wherein the overhead conveyor is adapted to convey right and left carcass sides in a transport direction,
characterised by
- a laying-down support structure comprising at least right and left laying-down support elements extending in different directions relative to a central part of the laying-down support structure;
- one or more positioning devices for mutual displacement of a carcase side and the laying-down support elements transversely to the transport direction.

Said mutual displacement of a carcase side and the laying down support elements transversely to the direction of transport preferably occurs in a horizontal plane, or at least partly in a horizontal plane, such that the displacement will occur seen from above.

The combination of the laying-down support structure with right and left laying-down support elements on the one side and said one or more positioning elements on another side enables a precise and controlled laying down of both right and left carcase sides. Accordingly, manual alignment labour at the working surface may be dispensed with resulting in lower manufacturing costs and increased efficiency.

The working surface is normally constituted by one or more tables or conveyor belts on which subsequent rough cutting up, hind tow cutting, vision inspection etc. may take place.

The overhead conveyor may be a conveyor from which the carcase sides are suspended in hooks or chains.

The right and left laying-down support elements may be shaped differently or be differently oriented relative to the working surface and relative to the overhead conveyor. The laying-down support elements may be shaped as bars or beams which are angled relative to the working surface and the overhead conveyor. The laying-down support elements may be angled relative to the working surface such that the right laying-down support elements, when seen from above (or in horizontal plane) form a positive angle relative to the longitudinal axis of the working surface, while the left laying-down support elements form a negative angle relative to said longitudinal axis. The angles may be equal such that the laying-down support structure is symmetrical about its central part which in a preferred embodiment is identical to the central/conveyor axis of the overhead conveyor, however in other embodiments the angles may be different. Thus, it may be possible to ensure that right and left carcase sides may be laid down at different angles relative to the working surface. The angles of the laying-down support elements relative to the working surface may be constant or variable. If the laying-down support elements comprise bars, beams, rolls or the like, these may be pivotably or displaceably mounted on a frame such that their spatial orientation, including the angle relative to the working surface, may be regulated. Such a regulation may either be performed manually, e.g. by way of manual release of one of the retention mechanisms, subsequent regulation and finally tentioning, or by means of a control device coupled to an actuator providing spatial adjustment of the laying-down support elements.

The laying-down support elements may be shaped as or provided with rolls ensuring low resistance between the laying-down support elements and the carcase sides. Each right and left laying-down support element may comprise one bar, roll or beam or a plurality of bars, rolls or beams with different lengths, arranged at different heights relative to the working surface and/or with different angles relative to the working surface. It is thereby possible to provide the laying-down support elements with the shape and configuration resulting in the desired laying down. The laying-down support elements may also comprise plane, curved or three-dimensionally shaped plates.

In an embodiment of the invention, at least some of the laying-down support elements define acute angles relative to the transport direction, seen in horizontal plane, i.e.. seen from above. As an example, the laying-down support elements may define a V-shape in the horizontal plane, which V-shape opens upstream relative to the transport direction such that right and left carcase sides are received between the legs of the V.

The laying-down support elements may also comprise a plurality of pairs of right and left laying-down support elements wherein each pair of laying-down support elements is arranged in different positions in the transport direction. If the laying-down support elements are arranged at different heights, the pairs may as an example be used for gradually lifting the lower part of the carcase side. Alternatively or as a supplement hereto, the laying-down support elements may have different angling in the vertical and/or horizontal plane for controlling the orientation and angling of the carcase side during laying down. At least one of the pairs of the laying down support elements may form an upward open V when seen in the vertical plane whereby the gravity during laying down may be used for centering the carcase side relative to the central part of the laying-down support structure. In preferred embodiments, the laying-down support structure comprises at least two pairs of right and left support elements: a first, upstream pair which is angled in the horizontal plane and at least one further pair arranged upstream relative to the first pair, and which is angled in the vertical plane.

The laying-down support elements which in the horizontal plane are angled relative to the working surface and thereby relative to the overhead conveyor provide the advantage of the positioning devices being used to control contact between carcase side and laying-down support element as the sideways position of the laying-down support element is determining for how far it extends upstream in the direction of movement of the carcase side and the overhead conveyor. In case of relatively large carcase sides it may be desirable that the carcase side abuts the laying-down support elements early such that it is not pulled to far across the working surface while relatively small carcase sides are allowed further across the working surface. Alternatively, the nature of the subsequent processing on the working surface may be decisive as to how far the carcase side is desired to be pulled across the working surface i.e. for the mutual position of carcase side and laying-down support element transversely to the transport direction. If as an example hind tow cutting is to be carried out on the working surface it may be desirable to pull the carcase side further across the working surface, than if no hind tow cutting is to be performed.

Similarly, the angling of the carcase sides relative to the working surface may be determined by the nature of the subsequent processing on the working surface. The angling may similarly be controlled by the mutual position of the carcase side and the laying-down support element.

The angles of the laying-down support elements relative to horizontal and/or relative to vertical may contribute to ensuring that the carcase sides are laid down with the skin side facing down towards the working surface.

The positioning device or the positioning devices may comprise stationary and/or movable parts. Such stationary parts may be elements which utilize the overhead conveyor's movement of the carcase sides for sideways displacement of the carcase sides by forcing the carcase sides away from the line of movement of the overhead conveyor. Movable parts may comprise a displaceable structure for movement of at least part of the support structure transversely to the transport direction. As an example, a frame may be provided onto which the laying-down support elements may be mounted. The frame may as an example be moved by linear actuators, motor-driven belt or toothed pulls or the like such that the right and left laying-down support elements are movable together or separately in a direction transverse to the transport direction of the overhead conveyor.

A stationary positioning device may comprise a branching-off device which seen in the transport direction is arranged upstream relative to the laying-down support structure, and which is adapted to displace a passing carcase side transversely to the direction of movement. The branching-off device may as an example form a V- or a Y-shape in horizontal plane such that right carcase sides are displaced to one side relative to the branching-off device, and such that left carcase sides are displaced to another side relative to the branching-off device as the point of the V- or Y-shape faces upstream relative to the transport direction. In order to prevent that a carcase side displaced to one of said sides relative to the branching-off device swings back to its original sideways position before it has reached one of the laying-down support elements, a central barrier may be provided between the branching-off device and the laying-down support structure. The central barrier may form an integral part of the branching-off device.

A preferred embodiment of the invention comprises stationary as well as movable positioning devices.

The positioning device or the positioning devices may be controlled by a control unit or a control system, e.g. an electric or electronic control unit. In a particularly advantageous embodiment, the control unit is adapted to receive information for the identification of whether a carcase side arriving at the laying-down device is a right or a left carcase side such that the positioning device or the positioning devices may be controlled depending on this information. Alternatively or as a supplement hereto, the positioning device or the positioning devices may be controlled depending on a different type of information, such as specification of the size of the carcase side or information associated to the carcase side indicating which type of processing is to be performed at the working surface, e.g. whether the carcase side in question is to be subjected to hind tow cutting.

In a second aspect, the invention provides a system for conveying carcase sides and for laying down these from an overhead conveyor to a working surface, comprising:
- an overhead conveyor adapted to convey right and left carcase sides in a transport direction;
- a device according to the first aspect of the invention for laying down the carcase sides from the overhead conveyor to the working surface.

The overhead conveyor may advantageously have a downward slanting part which, seen in the direction of movement, has a downstream part relative to the laying-down support structure such that the overhead conveyor simultaneously may guide an upper end of a carcase side across and down towards the working surface while a lower end of the carcase side abuts one or more of the laying-down support elements. When a carcase side is conveyed over and above a support structure for laying down carcase sides, the carcase side will thus gradually and cautiously be laid down on the working surface. In this context, the upper end of the carcase side is to be understood as the end closest to the overhead conveyor, i.e. the hind toe if the carcase side is suspended in or by its hind toe.

From the abovementioned description of the device according to the first aspect of the invention, the positioning device and the laying-down support structure may be arranged such that the mutual position of a carcase side and one or more of the laying-down support elements transversely to the transport direction are decisive for the angle acquired by the laid down carcase side relative to the working surface after laying down.

If the system comprises a branching-off device as described above, this is preferably stationary.

For the purpose of being able to sort right and left carcase sides onto each side relative to the branching-off device, the system may comprise a directing device arranged upstream to the branching-off device, and a support means extending between the directing device and the branching-off device. The support means may comprise one or more abutment surfaces provided below the overhead conveyor. In that case the directing device is adapted to direct right carcase sides to one side of the support means and left carcase sides to another side of the support means. At the same time the support means is arranged relative to the branching-off device or connected thereto in such that right carcase sides of the branching-off device are displaced to one side of the branching-off device and left carcase sides of the branching-off device are displaced to another side of the branching-off device. The support means may be constituted by or form an integral part of the branching-off device.

A suitable directing device is described in detail in international patent application No. WO 2007/009468 A1 (PCT/DK2006/000425) which describes a system that automatically ensures that all carcase sides are conveyed with their back sides facing forward. WO 2007/009468 A1 is hereby incorporated by reference.

In a third aspect, the invention provides a method for laying down carcase sides from an overhead conveyor to a working surface wherein right and left carcase sides are conveyed by the overhead conveyor in a transport direction, the method comprising the steps of:
- conveying at least a lower part of the carcase sides past a laying-down support structure comprising right and left laying down support elements extending in different directions relative to a central part of the laying-down support structure;
- mutually displacing a carcase side and the laying down support elements transversely to the transport direction so as to control the orientation and positioning of the carcase side when said carcase side is laid down on the working surface.

Said mutual displacement of a carcase side and the laying-down support elements transversely to the transport direction mainly occurs in a horizontal plane, or at least partly in a horizontal plane, such that the displacement will occur seen from above.

The conveyance of the carcase sides may advantageously be arranged such that right and left carcase sides are conveyed on different sides of the support means which is provided below the overhead conveyor, i.e. the skin side of the right and left carcase sides, respectively, facing each their way, i.e. the skin sides of right carcase sides are facing in the right direction when seen in the direction of movement of the overhead conveyor, and the skin sides of left carcase sides are facing in the left direction when seen in the direction of movement of the overhead conveyor. The back side is preferably conveyed first on all carcase sides. Orientation and direction of the carcase sides may occur manually or automatically cf. the description above. The support means ensures that the carcase sides remain in the desired position i.e. that they do not rotate about their vertical, longitudinal axis. The support means branch off in a Y-line manner at the branching-off device prior to the laying-down support structure such that the lower part of the carcase sides is forced away from a vertical plane in the direction of the overhead conveyor, and such that the right carcase sides are forced to one side and left carcase sides to another side. As described above, the overhead conveyor continues downwards at a slanted angle above the working surface, and at a predetermined position the carcase sides are released from the overhead conveyor and may possibly fall the rest of the way down to the working surface. The release may occur by releasing hooks, e.g. by cutting sinews, by lifting out of hooks or by hind toe cutting.

### Description of the drawings

An embodiment of the invention will now be described further with reference to the drawings, in which:
Figs. 1 shows laying down of a carcase side by means of a system according to the invention, seen from the side;
Fig. 2 shows laying down of carcase sides by means of a system according to the invention, seen from above;
Figs. 3A-3C show functions of a laying-down device according to the invention.

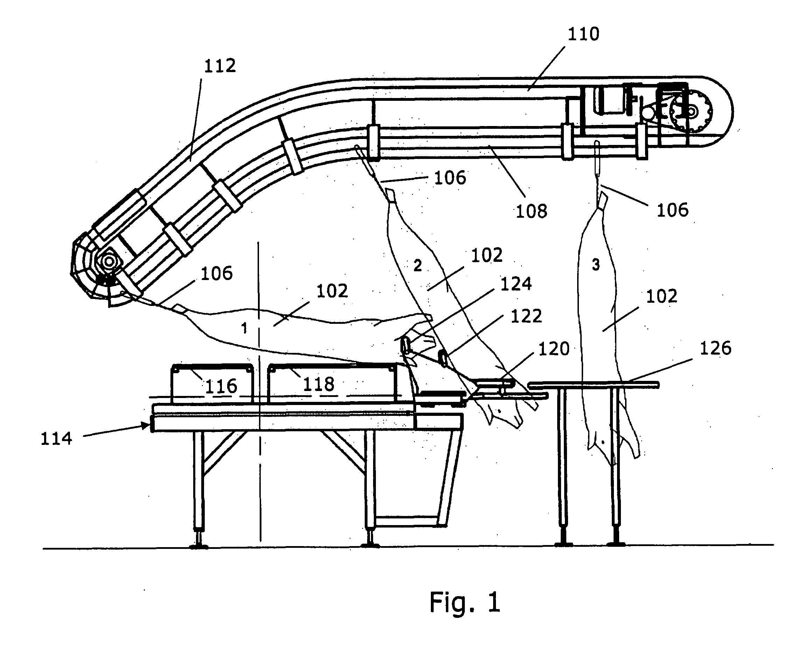

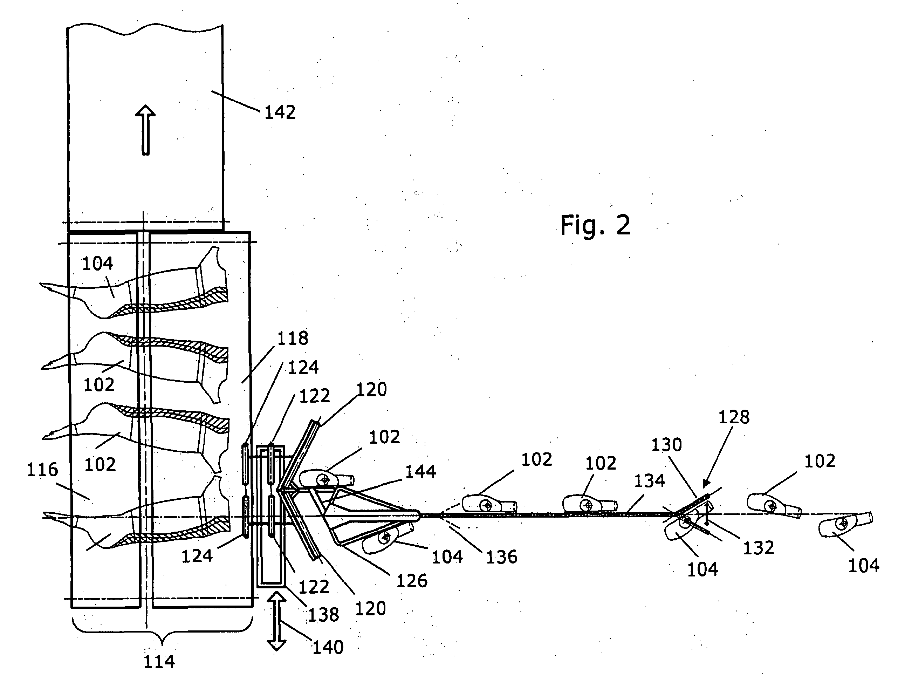

Fig. 1 discloses a pig carcase side 102 in three different positions during laying down. The carcase side is by its upper end suspended by its hind toe in a chain 106 and advanced by means of an overhead conveyor 108. In Fig. 1, the transport direction is from right towards left. The overhead conveyor has a substantially horizontal part 110 which for illustration purposes is shortened in Fig. 1, but which normally extends further towards the right than shown in Fig. 1 (see Fig. 2). Furthermore, the overhead conveyor has a downward slanting part 112 extending across a working surface 114 onto which the carcase side is laid down. In the illustrated example, the working surface comprises two conveyor belts 116 and 118 which capable of conveying the carcase side laid down in a direction transverse to the plane of the paper in Fig. 1.

In Fig. 1 the carcase side is shown in three different positions marked by the numbers 1, 2 and 3. Position 1 is the position of the carcase side immediately before laying down has been completed, position 2 is a middle position during the laying down, and position 3 is an initial position during laying down. In position 3, the carcase side 102 passes a Y-shaped branching-off device 126 which is described further in connection with Fig. 2 below. Before the carcase side reaches position 2, its lower part, i.e. the head part, will abut a first laying-down support element 120. During the further advancement of the upper part of the carcase side, i.e. the hind toe end, along the overhead conveyor 108, the lower part of the carcase side, i.e. the head part, will be retained by the first laying-down support element 120, and the downward declining part 112 of the overhead conveyor will result in the fact that the carcase side is conveyed through the middle position 2. Subsequently, the carcase side will be advanced further towards position 1, and on the way the lower part of its back side will slide or roll across further laying-down support elements 122 and 124 provided stepwise higher than the first laying-down support element 120. Finally, the carcase side will reach position 1 in which the chain 106 will release its grip around the hind toe of the carcase side such that the carcase side 102 falls the rest of the way down onto the working surface 114.

Fig. 2 illustrates a system according to the invention seen from above. The right and left carcase sides 102 and 104 are conveyed in arbitrary order by means of the overhead conveyor 108 from right towards left. A directing device 128 comprising a pivotal switch 130 as illustrated by the arrow 132 ensures that right carcase sides 102 are directed out on the right side of a support means 134, and that left carcase sides 104 are directed out on the left side of the support means 134. The directing device 128 may be electronically controlled, and the position of the switch 130 may as an example be determined by a signal from an upstream sensor (not shown) detecting whether a carcase side arriving at the directing device is a right or a left carcase side. As illustrated by the dotted lines 136, the directing device 128 may alternatively be located closer to the branching-off device 126. In an alternative embodiment, the directing device 128 may be located in abutment with the branching-off device 126 such that the function of the support means 134 is solely performed by the branching-off device 126.

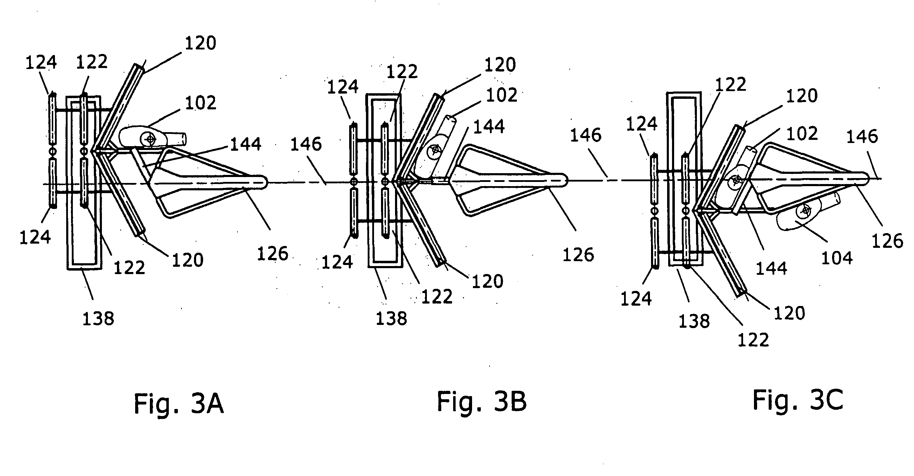

The branching-off device 126 is provided with a downstream central barrier 144 ensuring that the carcase side 102 swings back to its original, sideways position before it has reached the laying-down support element 120. The central barrier is pivotably mounted in a slide bar such that it functions for right as well as left carcase sides, see figs. 3A-3C.

The support means 134 extends in the transport direction from the directing device 128 to the Y-shaped branching-off device 126 forcing right and left carcase sides in different directions, i.e. away from the axis of movement of the overhead conveyor 108. Downstream to the branching-off device 126 is shown three pairs of laying-down support elements 120, 122 and 124, all mounted on a frame 138. A first pair of laying-down support elements 120 forms a V-shape when seen in the horizontal plane while the two other pairs of laying-down support elements 122 and 124 form V-shapes when seen in the vertical plane. The frame 138 is horizontally movable transversely to the transport direction of the overhead conveyor as shown by arrow 140. In Fig. 2, the frame 138 and thereby the first pair of laying-down support elements 120 are shown in a position for laying down a right carcase side 102. The function of movement of the frame 138 is described further below with reference to figs. 3A-3C.

As it may be seen in Fig. 2, the carcase sides 102, 104 may be laid down at different angles relative to the working surface 114, and their position relative to the working surface 114 may also be controlled. In the illustrated example, the working surface 114 comprises an upstream part comprising two conveyor belts 116 and 118 and a downstream part comprising one individual conveyor belt 142.

The mobility of the frame 138 and thus the laying-down support elements 120, 122 and 124 is illustrated in figs. 3A-3C. The through-going line of symmetry 146 symbolises the transport axis of the overhead conveyor 108. The position in Fig. 3A corresponds to the position in Fig. 2 wherein the V-shaped upstream pair of laying-down support elements 120 is ready to receive a right carcase side 102. The central barrier 144 at the downstream end of the branching-off device 126 ensures that the carcase side does not swing towards the transport axis 146 too early. In Fig. 3B the frame is moved to its middle position, and the right carcase side 120 is conveyed further by the overhead conveyor and angled by the first, upstream laying-down support element 120. The central barrier 144 is withdrawn to a middle position. In Fig. 3C, the frame and thereby the laying-down support elements 120, 122 and 124 are in their furthermost left position wherein they are ready to receive a left carcase side 104 arriving. The central barrier 144 is not swung to the left.

When conveying the right carcase side 102 further, it is laid down as illustrated.

## Claims

1. A device for laying down carcase sides (102;104) from an overhead conveyor (108) to a working surface (114) wherein the overhead conveyor is adapted to convey right and left carcass sides in a transport direction, **characterised by**
- a laying-down support structure (120;122;124) comprising at least right and left laying-down support elements (120;122;124) extending in different directions relative to a central part of the laying-down support structure;
- one or more positioning devices (126;138) for mutual displacement of a carcase side (102; 104) and the laying-down support elements (120;122;124) transversely to the transport direction.

2. A device according to claim 1, wherein at least some of the laying-down support elements (120), in a horizontal plane, define acute angles relative to the transport direction.

3. A device according to any of the preceding claims, wherein the laying-down support elements (120;122;124) comprise a plurality of pairs of right and left laying-down support elements, and wherein each pair of the laying-down support elements is arranged in different positions in the transport direction.

4. A device according to claim 3, wherein each pair of laying-down support elements (120;122;124) is positioned at different heights.

5. A device according to any of the preceding claims, wherein said at least one or more positioning devices comprise a branching-off device (126) which when seen in the transport direction is positioned upstream relative to the laying-down support structure (120;122;124), and which is adapted to displace a passing carcase side transversely to the movement device.

6. A device according to claim 5, further comprising a central barrier (144) provided between the branching-off device (126) and the laying-down support structure (120; 122; 124), the central barrier being positioned such that a carcase side which is displaced to one of said sides relative to the branching-off device is prevented from swinging back to its original sideways position prior to its receipt by one of the laying-down support elements (120; 122; 124).

7. A device according to any of the preceding claims, further comprising a control unit for controlling said one or more positioning devices (138), wherein the control unit is adapted to receive information for identification of whether a carcase side arriving at the laying-down device is a right or a left carcase side, and wherein the control unit is programmed to control said one or more positioning devices (138) depending on said information.

8. A device according to any of the preceding claims, wherein said one or more positioning devices comprise a system (138) for movement of at least part of the support structure transversely to the transport direction.

9. A system for conveying carcase sides (102;104) and for laying down these from an overhead conveyor (108) to a working surface (114), comprising:
- an overhead conveyor (108) adapted to convey right and left carcase sides (102;104) in a transport direction;
- a device according to any of the preceding claims for laying down the carcase sides (102;104) from the overhead conveyor (108) to the working surface (114).

10. A system according to claim 9, wherein the overhead conveyor (108) has a downward slanting part (112) which, seen in the direction of movement, has a downstream part relative to the laying-down support structure (120;122;124) such that the overhead conveyor simultaneously may guide an upper end of a carcase side across and down towards the working surface (114) while a lower part of the carcase side abuts one or more of the laying-down support elements (120;122;124).

11. A system according to claims 9 or 10, wherein the positioning devices 126;138) and the laying-down support structure are configured such that the mutual position of a carcase side (102;104) and at least one of the laying-down support elements (120;122;124) transversely to the transport direction determines the angle at which the respective carcase side (102;104) is positioned relative to the working surface (114) when said carcase side is laid down.

12. A system according to any of claims 9-11, wherein the laying-down device is according to claim 5 and wherein the branching-off device (126) is stationary, the system further comprising a directing device (128) arranged upstream relative to the branching-off device (126), and a support means (134) extending between the directing device (128) and the branching-off device (126), said directing device being adapted to direct right carcase sides (102) to one side of the support means (134), and left carcase sides (104) to a another side of the support means (134), and wherein the support means is arranged relative to the branching-off device (126) or connected thereto such that right carcase sides (102) by means the branching-off device (126) are displaced to one side of the branching-off device (126) and left carcase sides (104) by means of the branching-off device (126) are displaced to another side of the branching-off device (126).

13. A method for laying down carcase sides (102;104) from an overhead conveyor (108) to a working surface (114) wherein right and left carcase sides (102;104) are conveyed by the overhead conveyor (108) in a transport direction, the method comprising the steps of:
- conveying at least a lower part of the carcase sides past a laying-down support structure (120;122;124) comprising right and left laying-down support elements (120;122;124) extending in different directions relative to a central part of the laying-down support structure;
- mutually displacing a carcase side (102;104) and the laying-down support elements (120;122;124) transversely to the transport direction so as to control the orientation and positioning of the carcase side (102;104) when said carcase side is laid down on the working surface (114).

14. A method according to claim 13, wherein right and left carcase sides (102;104) are conveyed on different sides of a support means (134) which is provided below the overhead conveyor (108) and upstream relative to the support structure (102;122;124) with the respective skin sides of right and left carcase sides facing in different directions.

15. A method according to claim 14, wherein the support means (134) branch off in a Y-like manner at a branching-off device (126) such that the lower part of the carcase sides is forced away from a vertical plane, and such that right carcase sides (102) are forced to one side of the branching-off device (126), and left carcase sides (104) are forced to another side of the branching-off device (126).

## Patentansprüche

1. Vorrichtung zum Ablegen von Schlachtkörperhälften (102;104) von einem Hängeförderer (108) auf eine Arbeitsfläche (114), wobei der Hängeförderer zur Förderung von rechten und linken Schlachtkörperhälften in einer Förderrichtung eingerichtet ist, **gekennzeichnet durch**
- einen Ablegehaltevorrichtung (120; 122; 124), umfassend mindestens rechte und linke Ablegehalteelemente (120;122;124), die sich in Bezug auf einen zentralen Teil der Ablegehaltevorrichtung in unterschiedliche Richtungen erstrecken;
- eine oder mehrere Positionierungseinrichtungen (126;138) für das gegenseitige Verschieben einer Schlachtkörperhälfte (102; 104) zu den Ablegehalteelementen (120; 122; 124) quer zur Förderrichtung.

2. Vorrichtung nach Anspruch 1, wobei mindestens einige der Ablegehalteelemente (120) in einer horizontalen Ebene spitze Winkel in Bezug auf die Förderrichtung festlegen.

3. Vorrichtung nach einem der vorhergehenden Ansprüche, wobei die Ablegehalteelemente (120;122;124) eine Mehrzahl an Paaren rechter und linker Ablegehalteelemente umfassen und wobei jedes Paar der Ablegehalteelemente in Förderrichtung in unterschiedlichen Positionen eingerichtet ist.

4. Vorrichtung nach Anspruch 3, wobei jedes Paar der Ablegehalteelemente (120;122;124) in unterschiedlicher Höhe positioniert ist.

5. Verfahren nach einem der vorhergehenden Ansprüche, wobei mindestens eine oder mehrere Positionierungseinrichtungen eine Abzweigvorrichtung (126) umfassen, die in Förderrichtung gesehen stromaufwärts in Bezug auf die Ablegehaltevorrichtung (120;122;124) positioniert ist und die zum Verschieben einer vorbeipassierenden Schlachtkörperhälfte quer zur Bewegungsvorrichtung eingerichtet ist.

6. Vorrichtung nach Anspruch 5, weiterhin umfassend eine zentrale Barriere (144), die zwischen der Abzweigvorrichtung (126) und der Ablegehaltevorrichtung (120; 122; 124) vorgesehen ist, wobei die zentrale Barriere derart positioniert ist, dass eine Schlachtkörperhälfte, die zu einer der Seiten in Bezug auf die Abzweigvorrichtung verschoben ist, daran gehindert wird, vor der Aufnahme in einem der Ablegehalteelemente (120;122;124) in ihre ursprüngliche seitliche Position zurückzuschwingen.

7. Vorrichtung nach einem der vorhergehenden Ansprüche, weiterhin umfassend eine Steuereinheit zum Steuern der einen oder mehreren Positionierungsvorrichtungen (138), wobei die Steuereinheit zum Empfang von Informationen zur Identifizierung, ob eine an der Ablegevorrichtung ankommende Schlachtkörperhälfte eine rechte oder eine linke Schlachtkörperhälfte ist, eingerichtet ist, und wobei die Steuereinheit programmiert ist, eine oder mehrere Positionierungseinrichtungen (138) in Abhängigkeit von diesen Informationen zu steuern.

8. Vorrichtung nach einem der vorhergehenden Ansprüche, wobei die eine oder mehrere Positionierungseinrichtungen ein System (138) zur Bewegung mindestens eines Teils eher Haltevorrichtung quer zur Förderrichtung umfassen.

9. System zum Fördern von Schlachtkörperhälften (102;104) und zum Ablegen derselben von einem Hängeförderer (108) auf eine Arbeitsfläche (114), umfassend:
- einen Hängeförderer (108), der zum Fördern von rechten und linken Schlachtkörperhälften (102;104) in einer Förderrichtung eingerichtet ist;
- eine Vorrichtung nach einem der vorhergehenden Ansprüche zum Ablegen der Schlachtkörperhälften (102;104) von dem Hängeförderer (108) auf die Arbeitsfläche (114).

10. System nach Anspruch 9, wobei der Hängeförderer (108) ein nach unten geneigtes Teil (112) aufweist, das in Bewegungsrichtung gesehen ein in Bezug zu der Ablegehaltevorrichtung (120;122;124) stromabwärts angeordnetes Teil aufweist, sodass der Hängeförderer gleichzeitig ein oberes Ende einer Schlachtkörperhälfte in Querrichtung und nach unten zur Arbeitsfläche (114) führen kann, während ein unteres Ende der Schlachtkörperhälfte an einem oder mehreren der Ablegehalteelemente (120;122;124) anliegt.

11. System nach Anspruch 9 oder 10, wobei die Positionierungseinrichtungen (126;138) und die Ablegehaltevorrichtung derart konfiguriert sind, dass die Position einer Schlachtkörperhälfte (102;104) zu mindestens einem der Ablegehalteelemente (120;122;124) quer zur Förderrichtung den Winkel festlegt, in dem die fragliche Schlachtkörperhälfte (102;104) beim Ablegen der Schlachtkörperhälfte in Bezug auf die Arbeitsfläche (114) positioniert wird.

12. System nach einem der Ansprüche 9-11, wobei die Ablegevorrichtung nach Anspruch 5 ist und wobei die Abzweigvorrichtung (126) ortsfest ist, wobei das System weiterhin eine Leitvorrichtung (128) umfasst, die stromaufwärts in Bezug auf die Abzweigvorrichtung (126) angeordnet ist, und ein Haltemittel (134), das sich zwischen der Leitvorrichtung (128) und Abzweigvorrichtung (126) erstreckt, wobei die Leitvorrichtung derart eingerichtet ist, dass rechte Schlachtkörperhälften (102) zu einer Seite des Haltemittels (134) und linke Schlachtkörperhälften (104) zu einer anderen Seite des Haltemittels (134) geleitet werden, und wobei das Haltemittel derart in Bezug auf die Abzweigvorrichtung (126) angeordnet oder damit verbunden ist, dass rechte Schlachtkörperhälften (102) mithilfe der Abzweigvorrichtung (126) zu einer Seite der Abzweigvorrichtung (126) verschoben werden und linke Schlachtkörperhälften (104) mithilfe der Abzweigvorrichtung (126) zu einer anderen Seite der Abzweigvorrichtung (126) verschoben werden.

13. Verfahren zum Ablegen von Schlachtkörperhälften (102;104) von einem Hängeförderer (108) auf eine Arbeitsfläche (114), wobei rechte und linke Schlachtkörperhälften (102;104) von dem Hängeförderer (108) in einer Förderrichtung gefördert werden, wobei das Verfahren folgende Schritte umfasst:
- Fördern mindestens eines unteren Teils der Schlachtkörperhälften vorbei an einer Ablegehaltevorrichtung (120;122;124), die rechte und linke Ablegehalteelemente (120;122;124) umfasst, welche sich in Bezug auf einen zentralen Teil der Ablegehaltevorrichtung in unterschiedliche Richtungen erstrecken;
- gegenseitiges Verschieben einer Schlachtkörperhälfte (102; 104) zu den Ablegehalteelementen (120;122;124) quer zur Förderrichtung, sodass die Ausrichtung und Positionierung der Schlachtkörperhälfte (102;104) beim Ablegen der Schlachtkörperhälfte auf die Arbeitsfläche (114) gesteuert ist.

14. Verfahren nach Anspruch 13, wobei rechte und linke Schlachtkörperhälften (102;104) auf verschiedenen Seiten eines Haltemittels (134) gefördert werden, das unterhalb des Hängeförderers (108) und in Bezug auf die Haltevorrichtung (102;122;124) stromaufwärts vorgesehen ist, wobei die Hautseiten der rechten und linken Schlachtkörperhälften in unterschiedliche Richtungen zeigen.

15. Verfahren nach Anspruch 14, wobei das Haltemittel (134) an einer Abzweigvorrichtung (126) Y-förmig verzweigt, sodass der untere Teil der Schlachtkörperhälften aus einer vertikalen Ebene gezwungen wird und sodass rechte Schlachtkörperhälften (102) zu einer Seite der Abzweigvorrichtung (126) gezwungen werden und linke Schlachtkörperhälften (104) zu einer anderen Seite der Abzweigvorrichtung (126) gezwungen werden.

## Revendications

1. Dispositif permettant de déposer des demi-carcasses (102 ; 104) depuis un convoyeur aérien (108) sur une surface de travail (114), dans lequel le convoyeur aérien est adapté pour transporter des demi-carcasses droites et gauches dans un sens de transport, **caractérisé par**
- une structure de support pour le dépôt (120 ; 122 ; 124) comprenant au moins des éléments droits et gauches de support pour le dépôt (120 ; 122 ; 124) qui s'étendent dans différentes directions par rapport à une partie centrale de la structure de support pour le dépôt ;
- un ou plusieurs dispositifs de positionnement (126 ; 138) pour le déplacement mutuel d'une demi-carcasse (102 ; 104) et des éléments de support pour le dépôt (120 ; 122 ; 124) perpendiculairement au sens de transport.

2. Dispositif selon la revendication 1, dans lequel au moins certains des éléments de support pour le dépôt (120) définissent, dans un plan horizontal, des angles aigus par rapport au sens de transport.

3. Dispositif selon l'une quelconque des revendications précédentes, dans lequel les éléments de support pour le dépôt (120 ; 122 ; 124) comprennent plusieurs paires d'éléments droits et gauches de support pour le dépôt, et dans lequel chaque paire d'éléments de support pour le dépôt est disposée dans différentes positions dans le sens de transport.

4. Dispositif selon la revendication 3, dans lequel chaque paire d'éléments de support pour le dépôt (120 ; 122 ; 124) est positionnée à différentes hauteurs.

5. Dispositif selon l'une quelconque des revendications précédentes, dans lequel lesdits un ou plusieurs dispositifs de positionnement comprennent un dispositif de bifurcation (126) qui, vu dans le sens de transport, est positionné en amont de la structure de support pour le dépôt (120 ; 122 ; 124), et qui est adapté pour déplacer perpendiculairement au dispositif de mouvement une demi-carcasse qui passe.

6. Dispositif selon la revendication 5, comprenant également une barrière centrale (144) située entre le dispositif de bifurcation (126) et la structure de support pour le dépôt (120 ; 122 ; 124), la barrière centrale étant positionnée de manière à ce qu'une demi-carcasse déplacée vers un desdits côtés par rapport au dispositif de bifurcation soit empêchée de revenir par balancement à sa position latérale d'origine avant réception par un des éléments de support pour le dépôt (120 ; 122 ; 124).

7. Dispositif selon l'une quelconque des revendications précédentes, comprenant également une unité de commande destinée à commander lesdits un ou plusieurs dispositifs de positionnement (138), dans lequel l'unité de commande est adaptée pour recevoir des informations permettant de déterminer si une demi-carcasse arrivant au niveau du dispositif de dépôt est une demi-carcasse droite ou gauche, et dans lequel l'unité de commande est programmée pour commander lesdits un ou plusieurs dispositifs de positionnement (138) en fonction desdites informations.

8. Dispositif selon l'une quelconque des revendications précédentes, dans lequel lesdits un ou plusieurs dispositifs de positionnement comprennent un système (138) permettant de mouvoir au moins une partie de la structure de support perpendiculairement au sens de transport.

9. Système permettant de transporter des demi-carcasses (102 ; 104) et de déposer celles-ci depuis un convoyeur aérien (108) sur une surface de travail (114), comprenant :
- un convoyeur aérien (108) adapté pour transporter des demi-carcasses droites et gauches (102 ; 104) dans un sens de transport ;
- un dispositif selon l'une quelconque des revendications précédentes permettant de déposer les demi-carcasses (102 ; 104) depuis le convoyeur aérien (108) sur la surface de travail (114).

10. Système selon la revendication 9, dans lequel le convoyeur aérien (108) comporte une partie inclinée vers le bas (112) qui, vue dans le sens du mouvement, comporte une partie aval par rapport à la structure de support pour le dépôt (120 ; 122 ; 124) telle que le convoyeur aérien peut simultanément guider une extrémité supérieure d'une demi-carcasse vers la surface de travail dans un mouvement transversal vers le bas (114) alors qu'une partie inférieure de la demi-carcasse vient buter contre un ou plusieurs des éléments de support pour le dépôt (120 ; 122 ; 124).

11. Système selon la revendication 9 ou 10, dans lequel les dispositifs de positionnement (126 ; 138) et la structure de support pour le dépôt sont configurés de manière à ce que la position mutuelle d'une demi-carcasse (102 ; 104) et d'au moins un des éléments de support pour le dépôt (120 ; 122 ; 124) perpendiculairement au sens de transport détermine l'angle selon lequel la demi-carcasse en question (102 ; 104) est positionnée par rapport à la surface de travail (114) au moment du dépôt de ladite demi-carcasse.

12. Système selon l'une quelconque des revendications 9 à 11, dans lequel le dispositif de dépôt est conforme à la revendication 5 et dans lequel le dispositif de bifurcation (126) est fixe, le système comprenant également un dispositif d'orientation (128) installé en amont du dispositif de bifurcation (126), et un moyen de support (134) s'étendant entre le dispositif d'orientation (128) et le dispositif de bifurcation (126), ledit dispositif d'orientation étant adapté pour orienter les demi-carcasses droites (102) vers un côté du moyen de support (134) et les demi-carcasses gauches (104) vers un autre côté du moyen de support (134), et dans lequel le moyen de support est disposé par rapport au dispositif de bifurcation (126) ou relié à celui-ci de manière à ce que les demi-carcasses droites (102) soient déplacées, au moyen du dispositif de bifurcation (126), vers un côté du dispositif de bifurcation (126) et les demi-carcasses gauches (104) soient déplacées, au moyen du dispositif de bifurcation (126), vers un autre côté du dispositif de bifurcation (126).

13. Méthode de dépôt de demi-carcasses (102 ; 104) depuis un convoyeur aérien (108) sur une surface de travail (114) dans laquelle les demi-carcasses droites et gauches (102 ; 104) sont transportées par le convoyeur aérien (108) dans un sens de transport, la méthode comprenant les étapes suivantes :
- transport d'au moins une partie inférieure des demi-carcasses devant une structure de support pour le dépôt (120 ; 122 ; 124) comprenant des éléments droits et gauches de support pour le dépôt (120 ; 122 ; 124) qui s'étendent dans différentes directions par rapport à une partie centrale de la structure de support pour le dépôt ;
- déplacement mutuel d'une demi-carcasse (102 ; 104) et des éléments de support pour le dépôt (120 ; 122 ; 124) perpendiculairement au sens de transport de manière à contrôler l'orientation et le positionnement de la demi-carcasse (102 ; 104) au moment du dépôt de ladite demi-carcasse sur la surface de travail (114).

14. Méthode selon la revendication 13, dans laquelle les demi-carcasses droites et gauches (102 ; 104) sont transportées sur des côtés différents d'un moyen de support (134) situé au-dessous du convoyeur aérien (108) et en amont de la structure de support (102 ; 122 ; 124), les côtés « peau » respectifs des demi-carcasses droites et gauches faisant face à des directions différentes.

15. Méthode selon la revendication 14, dans laquelle le moyen de support (134) forme une bifurcation en Y au niveau d'un dispositif de bifurcation (126) si bien que la partie inférieure des demi-carcasses est poussée hors d'un plan vertical, et si bien que les demi-carcasses droites (102) sont poussées vers un côté du dispositif de bifurcation (126) et les demi-carcasses gauches (104) sont poussées vers un autre côté du dispositif de bifurcation (126).
